# FASCICULE DE BREVET EUROPEEN

(11) **EP 0 427 628 B1**
(45) Date de publication et mention de la délivrance du brevet: **15.02.1995**
(21) Numéro de dépôt: 90403165.5
(22) Date de dépôt: 07.11.1990
(51) Int. Cl.: G21F 5/02

(54) **Dispositif de mesure du débit de dose dans un château de transport contenant des déchets radioactifs**
Dosisleistungsmessvorrichtung in einem radioaktive Abfälle enthaltenden Transportbehälter
Dose-rate measuring device in a shipping cask containing radioactive wastes

(30) Priorité: 09.11.1989 FR 8914702
(43) Date de publication de la demande: 15.05.1991
(73) Titulaire: COGEMA COMPAGNIE GENERALE DES MATIERES NUCLEAIRES, F-78141 Velizy-Villacoublay (FR)
(72) Inventeur: Bukowski, Claude, F-50110 Bretteville en Saire (FR)
(74) Mandataire: Poulin, Gérard

(56) Documents cités:
- EP-A- 0 272 944
- FR-A- 1 515 024
- GB-A- 1 206 767
- US-A- 4 822 238

## Description

L'invention concerne un dispositif permettant de mesurer le débit de dose régnant à l'intérieur d'un château de transport dans lequel est placé un conteneur rempli de déchets radioactifs.

Certains déchets émettant des rayonnements α, β et γ, tels que ceux qui sont issus du retraitement des combustibles nucléaires utilisés dans les centrales nucléaires, sont généralement stockés sur des sites distincts de ceux sur lesquels ces déchets sont produits. Pour effectuer le transport, puis le stockage de ces déchets, ces derniers sont placés dans des conteneurs, puis chaque conteneur est introduit dans un château de transport raccordé sur une ouverture d'accès prévue dans l'enceinte de confinement contenant les déchets, sans rupture du confinement de cette enceinte. De façon plus précise, chaque conteneur est placé dans un porte-conteneur situé à l'intérieur du château de transport.

Certains des châteaux de transport existants, notamment les châteaux "Padirac", ont un fond percé d'un trou de passage. Après accostage du château sur l'enceinte de confinement, un ringard de transfert est introduit par ce trou de passage, après que son extrémité ait été accouplée sur une vis faisant saillie au centre de la face du porte-conteneur tournée vers le fond du château. Le ringard permet alors d'accoster, sur la paroi intérieure de l'enceinte, le conteneur placé dans le porte-conteneur. Après ouverture d'une double-porte, une pré-poubelle, généralement en carton, contenant les déchets est transférée à l'intérieur du conteneur. La double-porte est ensuite refermée et le porte-conteneur, le conteneur et la pré-poubelle contenant les déchets sont ramenés dans le château à l'aide du ringard de transfert.

Pour que le stockage des conteneurs contenant les déchets radioactifs puisse s'effectuer dans des conditions de sécurité satisfaisantes, il est souhaitable de bien connaître l'activité des déchets contenus dans les châteaux. Actuellement, il n'existe aucun moyen pour faire cette mesure.

L'invention a précisément pour objet un dispositif permettant de mesurer directement le débit de dose régnant à l'intérieur d'un château de transport présentant les caractéristiques indiquées précédemment, de façon à améliorer la connaissance du contenu des châteaux transportés et, par conséquent, la sécurité du stockage, ainsi que la gestion des activités.

Selon l'invention, ce résultat est obtenu au moyen d'un dispositif de mesure du débit de dose régnant à l'intérieur d'un château de transport contenant un porte-conteneur apte à recevoir un conteneur rempli de déchets radioactifs, le château de transport comportant un fond percé d'un trou de passage pour un ringard de transfert apte à s'accoupler sur une vis du porte-conteneur, ce dispositif étant caractérisé par le fait qu'il comprend :
- un porte-sonde comportant un tube apte à traverser le trou de passage, un écrou d'accouplement monté à une extrémité du tube et apte à être accouplé sur la vis du porte-conteneur, une porte articulée formée dans le tube et apte à occuper une position fermée et une position ouverte, et des moyens de manoeuvre accessibles depuis l'extrémité opposée du tube et commandant un déplacement de la porte entre ses positions ouverte et fermée ;
- une sonde de mesure du débit de dose fixée sur la porte de façon à être escamotée dans le tube lorsque la porte est en position fermée ;
- des moyens de mesure extérieurs reliés à la sonde de mesure du débit de dose par des conducteurs électriques passant à l'intérieur du tube.

Grâce à un dispositif ainsi conçu, on peut mesurer directement le débit de dose à l'intérieur du château de transport, lorsque le conteneur rempli de déchets radioactifs est introduit dans ce château, sans qu'il soit nécessaire d'effectuer aucune modification sur la structure de ce dernier. De plus, la distance séparant la sonde de mesure du conteneur est connue avec précision quel que soit le type de château utilisé, ce qui permet d'assurer une reproductibilité rigoureuse des mesures. En outre, il est possible de faire tourner le porte-sonde et, par conséquent, la sonde de 360°, ce qui permet de détecter un éventuel point chaud dans le conteneur.

Afin d'améliorer encore le caractère reproductible des mesures, les moyens de manoeuvre commandent également, de préférence, la fermeture d'un circuit électrique d'alimentation d'un système d'affichage des moyens de mesure, lorsque la porte est en position ouverte, c'est-à-dire par exemple lorsque la sonde est orientée à environ 90° par rapport à l'axe du tube.

Dans un mode de réalisation préféré de l'invention, les moyens de manoeuvre comprennent une tige coulissant axialement à l'intérieur du tube et dont une extrémité est articulée sur une biellette articulée sur la porte et située à l'opposé de cette dernière par rapport à son axe d'articulation sur le tube. L'extrémité opposée de la tige est alors reliée en translation à une poignée de commande qui coopère par un système vis-écrou avec l'extrémité du tube opposée à l'écrou d'accouplement.

L'extrémité de la tige opposée à la biellette est alors, de préférence, solidaire d'une douille qui ferme automatiquement un interrupteur monté à l'extrémité du tube opposée à l'écrou d'accouplement et appartenant au circuit électrique d'alimentation du système d'affichage, lorsque la douille arrive dans une position avant correspondant à la position ouverte de la porte.

Par ailleurs, l'écrou d'accouplement étant monté rotatif sur le porte-sonde, des moyens sont prévus pour commander un blocage en rotation de l'écrou par rapport au porte-sonde.

Un mode de réalisation préféré de l'invention va à présent être décrit, à titre d'exemple non limitatif, en se référant aux dessins annexés, dans lesquels :
- la figure 1 est une vue en coupe illustrant schématiquement la mesure du débit de dose régnant à l'intérieur d'un château de transport, à l'aide d'un dispositif de mesure conforme à l'invention, après le transfert dans le conteneur d'une pré-poubelle remplie de déchets radioactifs ;
- la figure 2 est une vue en coupe longitudinale représentant le dispositif de mesure du débit de dose conforme à l'invention ;
- la figure 3 est une vue en coupe à plus grande échelle illustrant la commande de pivotement de la porte sur laquelle est montée la sonde ;
- la figure 4 est une vue en coupe longitudinale représentant à plus grande échelle l'extrémité du porte-sonde située à l'extérieur du château de transport ; et,
- la figure 5 est une vue en coupe longitudinale représentant, à plus grande échelle, l'extrémité du porte-sonde apte à être fixée sur le porte-conteneur, selon une variante de réalisation de l'invention.

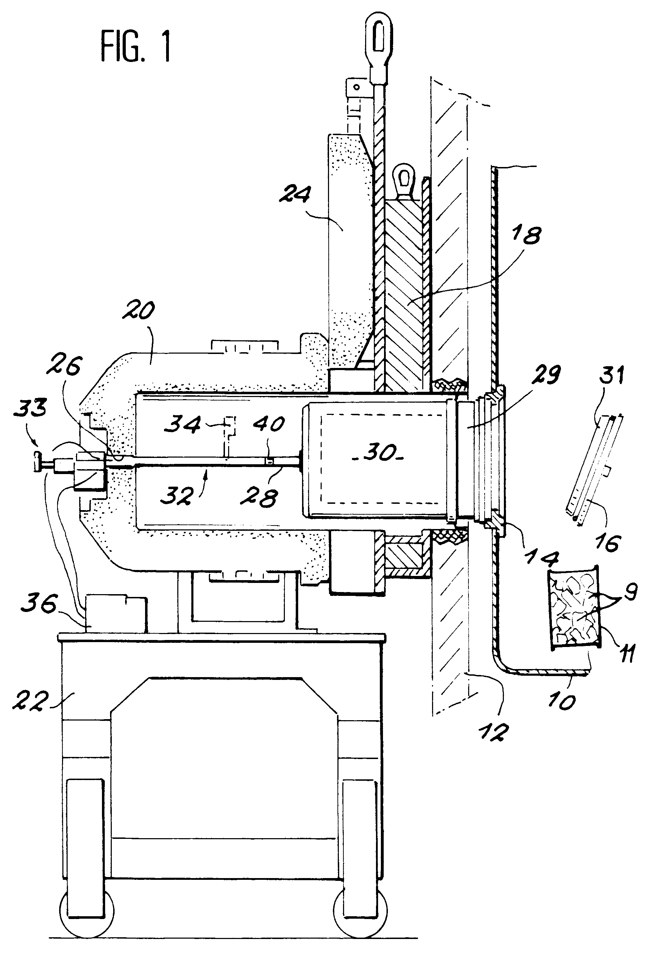

Sur la figure 1, la référence 10 désigne la paroi d'une enceinte de confinement dont seule une partie est représentée. Cette paroi 10 est doublée extérieurement par une protection biologique 12. L'enceinte de confinement, qui contient des déchets radioactifs , peut notamment se trouver sur un site de retraitement de combustibles provenant de réacteurs nucléaires.

Pour permettre l'évacuation des déchets radioactifs qu'elle contient, la paroi 10 de l'enceinte de confinement comporte au moins une ouverture d'accès délimitée par une bride 14 et normalement obturée par une porte 16. La protection biologique 12 comporte elle aussi une ouverture située en face de la porte 16 et normalement obturée par une porte coulissante appelée porte à masselottes 18.

On a également représenté sur la figure 1 un château de transport 20, du type "Padirac" monté sur une table support 22 et accosté sur l'ouverture formée dans la protection biologique 12 de l'enceinte. A cet effet, le château de transport 20 est placé sur le chariot 22 de telle sorte que son axe soit approximativement horizontal et que son extrémité normalement obturée par une porte coulissante 24 soit fixée de façon étanche sur la protection biologique 12 de l'enceinte et située en face de l'ouverture formée dans cette protection biologique.

Lorsque l'accostage du château de transport sur la protection biologique 12 est effectué, les portes 18 et 24 sont ouvertes. Un ringard de transfert est alors accouplé sur une vis 28 faisant saillie au centre du fond d'un porte-conteneur 30 logé dans le château 20, par un trou de passage 26 formé au centre du fond de ce dernier. Au moyen de ce ringard, on transfère le porte-conteneur 30 ainsi que le conteneur 29 qu'il contient, dans la position illustrée sur la figure 1, dans laquelle le conteneur 29 est accosté de façon étanche sur l'ouverture formée dans la paroi 10. La double-porte formée par la porte 16 et par la porte 31 du conteneur, est alors ouverte et les déchets 9 contenus dans une pré-poubelle 11, par exemple en carton, sont transférés dans le conteneur 29. Ce dernier, qui contient alors les déchets radioactifs remplissant la pré-poubelle 11, est ensuite transféré à l'intérieur du château de transport 20 au moyen du ringard de manutention qui actionne le porte-conteneur 30. On referme alors la double-porte 16, 31.

Jusqu'à présent, lorsque cette opération de transfert était terminée, on obturait le trou de passage 26, on fermait les portes 18 et 24, puis on désaccostait le château de transport de la protection biologique 12. Un contrôle du débit de dose régnant à l'extérieur du château était alors effectué avant que ce dernier ne soit transporté jusqu'au site de stockage choisi.

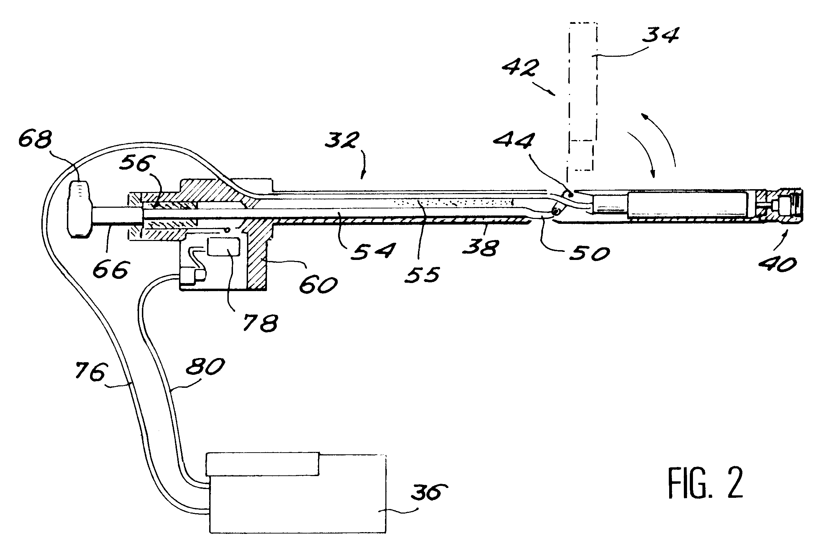

Conformément à l'invention, et afin d'améliorer la gestion et les conditions de sécurité lors du stockage des conteneurs 29, on procède à une mesure du débit de dose régnant à l'intérieur du château de transport 20, juste après que le porte-conteneur 30 contenant le conteneur 29 rempli de déchets radioactifs ait été ramené dans le château de transport 20. A cet effet, on utilise un dispositif de mesure désigné de façon générale par la référence 33 sur la figure 1 et qui comprend principalement, comme l'illustre plus en détail la figure 2, un porte-sonde 32, une sonde de mesure de débit de dose 34 et un appareil de mesure extérieur 36.

Le porte-sonde 32 comporte un tube rectiligne 38 dont le diamètre extérieur, identique à celui du ringard de transfert, lui permet de traverser le trou de passage 26 formé dans le fond du château 20. A son extrémité avant prévue pour être introduite à l'intérieur du château de transport 20, le tube 38 porte un écrou d'accouplement rotatif 40 apte à être accouplé par vissage sur la vis 28 faisant saillie sur le fond du porte-conteneur 30.

Dans sa partie adjacente à l'écrou d'accouplement 40, le tube 38 comprend une ouverture apte à être obturée par une porte articulée 42 de section semi-circulaire. Cette porte 42 est articulée sur le tube 38, à son extrémité opposée à l'écrou d'accouplement 40, par un axe 44 orthogonal à l'axe du tube 38 et décalé du côté de la porte 42 par rapport à ce dernier.

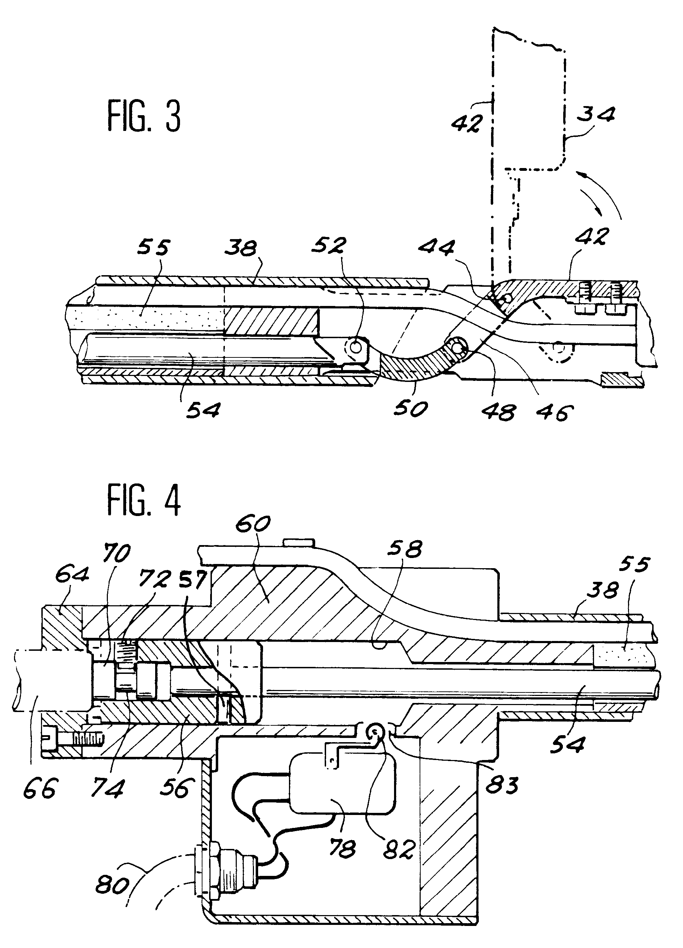

Comme l'illustre mieux la figure 3, la porte articulée 42 est prolongée au-delà de l'axe 44 par une partie 46 orientée en oblique vers l'arrière à l'intérieur du tube 38. A son extrémité, cette partie 46 est articulée par un axe 48 parallèle à l'axe 44 et située de l'autre côté de l'axe du tube 38 par rapport à cet axe 44, à l'extrémité d'une biellette 50 en arc de cercle, dont la concavité est tournée vers l'axe 44. L'extrémité opposée de la biellette 50 est articulée par un axe 52 parallèle à l'axe 48 et disposé du même côté et approximativement à la même distance que ce dernier de l'axe du tube 38, à l'extrémité avant d'une tige cylindrique 54. Cette dernière est montée coulissante à l'intérieur du tube 38 selon un axe parallèle à l'axe de ce dernier et coupant l'axe 52, dans des noix de plomb 55 remplissant la partie correspondante du tube 38 et servant à la protection biologique.

Comme l'illustre mieux la figure 4, l'extrémité opposée de la tige 54 est fixée par exemple au moyen d'une clavette 57 dans une douille 56 reçue de façon coulissante dans un alésage 58 formé dans une pièce 60 sur laquelle est fixée l'extrémité arrière du tube 38. La douille 56 est immobilisée en rotation dans la pièce 60, par exemple au moyen d'une clavette fixée sur cette dernière et faisant saillie dans une rainure axiale formée sur la douille 56.

A son extrémité arrière opposée au tube 38, la pièce 60 comporte un écrou 64 dans lequel est vissée une tige filetée 66 solidaire d'une poignée de manoeuvre 68. A l'opposé de la poignée de manoeuvre 68, la tige filetée 66 se prolonge par une partie cylindrique 70 reçue dans un alésage formé axialement dans la douille 56. Une vis sans tête 72 traversant radialement cette dernière pénètre par son extrémité dans une gorge 74 formée dans la partie cylindrique 70, de telle sorte que la poignée de manoeuvre 68 est solidarisée en translation de la douille 56 et, par conséquent, de la tige 54.

L'agencement qui vient d'être décrit permet, en actionnant la poignée de manoeuvre 68 dans l'un ou l'autre sens, de déplacer la porte 42 entre une position de fermeture dans laquelle cette porte constitue une partie complémentaire du tube 38 et une position ouverte dans laquelle la porte 42 peut être orientée par exemple à environ 90° par rapport à l'axe du tube 38.

Comme l'illustre la figure 2, la sonde de mesure du débit de dose 34 est fixée sur la face intérieure de la porte 42 par un moyen de fixation quelconque approprié, tel que des vis. Cette sonde de mesure peut être constituée par une sonde quelconque dont l'encombrement est suffisamment faible pour lui permettre de s'escamoter en totalité à l'intérieur du tube 38 lorsque la porte 42 est en position fermée. A titre d'exemple nullement limitatif, il peut s'agir notamment d'une sonde silicium SHF IF104 SAPHYMO autorisant la mesure d'un débit de dose compris entre 0,1 rad/h et 3.10⁴ rad/h.

Cette sonde est reliée à l'appareil de mesure extérieur 36 par des connecteurs électriques 76 qui cheminent à l'intérieur du tube 38, dans un passage formé à cet effet dans les noix de plomb 55, puis entre le porte-sonde 32 et l'appareil de mesure 36. Cet appareil de mesure est choisi de façon à être compatible avec la sonde 34. Il peut donc être constitué par tout appareil de mesure existant ou futur compatible avec une sonde dont le dimensionnement lui permet d'être escamotée en totalité à l'intérieur du tube 38. Dans le cas où on utilise une sonde silicium, il peut s'agir d'un système IF104 SAPHYMO.

Avantageusement, la pièce 60 supporte également un interrupteur tel qu'un micro-contact 78 qui est placé dans un circuit d'alimentation électrique en courant continu du système d'affichage de l'appareil de mesure extérieur 36. On a représenté sur la figure 2 les conducteurs 80 de ce circuit reliant le micro-contact 78 à l'appareil de mesure 36. Le micro-contact 78 comporte, comme l'illustre mieux la figure 4, un organe d'actionnement 82 qui fait saillie par un trou 83 dans la partie avant de l'alésage 58. Quand la face avant de la douille 56 vient repousser l'organe d'actionnement 82 du micro-contact 78 lors de la manoeuvre de la poignée 68 dans le sens de l'ouverture de la porte 42, le circuit d'alimentation en courant continu du système d'affichage de l'appareil de mesure 36 est mis automatiquement sous tension. En positionnant avec précision le micro-contact 78 dans la pièce 60, on peut ainsi être certain que l'affichage des mesures est obtenu pour une position d'ouverture bien précise et parfaitement reproductible de la porte 42. Cette position correspond par exemple à une orientation à 90° de la porte 42 par rapport à l'axe du tube 38. Elle peut varier selon la longueur de la douille 56.

Lorsqu'on désire utiliser le dispositif de mesure du débit de dose ainsi réalisé, on accouple l'extrémité avant du porte-sonde 32 sur le porte-conteneur en vissant l'écrou d'accouplement 40 sur la vis 28 du porte-conteneur 30, alors que ce dernier est placé dans le château 20 et contient le conteneur 29 rempli de déchets radioactifs. A ce moment, la porte 42 est en position fermée et la sonde 34 est escamotée à l'intérieur du tube 38.

Lorsque l'accouplement du tube 38 sur le porte-conteneur 30 a été effectué, le porte-sonde 32 est enfoncé à l'intérieur du château de transport 20 sur une distance déterminée qui dépend du type de château utilisé, cette distance étant contrôlée par un repère formé sur l'extérieur du tube 38.

L'opérateur actionne ensuite la poignée de manoeuvre 68, de façon à amener la porte 42 portant la sonde 34 en position ouverte. Lorsque cette position est atteinte, le micro-contact 78 ferme automatiquement le circuit d'alimentation en courant continu du système d'affichage de l'appareil 36 et l'affichage du débit de dose commence. Au cours de la mesure, on fait tourner le porte-sonde de 360° autour de l'axe du tube 38, ce qui permet d'effectuer un balayage circulaire à l'intérieur du château. La présence d'éventuels points chauds dans le conteneur est ainsi détectée.

Lorsque la mesure est terminée, la porte 42 est ramenée en position fermée en actionnant à nouveau la poignée de manoeuvre 68 et le porte-sonde 32 est ramené vers l'extérieur du trou de passage 26, ce qui a pour effet de ramener le porte-conteneur 30 contenant le conteneur 29 rempli de déchets radioactifs à l'intérieur du château 20. L'écrou d'accouplement 40 est alors dévissé et le porte-sonde 32 est sorti du château. Le trou de passage 26 ainsi que les différentes portes 18 et 24 peuvent alors être fermés et le château séparé de l'enceinte de confinement, puis transporté jusqu'à son site de vidange.

Afin que les mesures effectuées à l'intérieur du château de transport 20 ne soient pas entachées par les erreurs résultant du bruit de fond en provenance de l'enceinte de confinement 10, les opérations décrites précédemment peuvent être précédées d'une opération de mesure de ces bruits de fond, également effectuée à l'aide du dispositif de mesure 33, avant que le conteneur 29 ne soit rempli de déchets radioactifs.

L'utilisation du dispositif de mesure 33 conforme à l'invention permet d'effectuer les mesures du débit de dose à l'intérieur du château de transport 20 sans aucune modification de la structure de ce dernier et de façon parfaitement reproductible puisque le positionnement de la sonde à l'intérieur du château peut être contrôlé avec précision et que la distance séparant la sonde du conteneur est parfaitement constante.

Dans le mode de réalisation qui vient d'être décrit en se référant aux figures 1 à 4, il n'existe pas de possibilité de solidariser en rotation l'écrou 40 de la tige 38.

Dans certains cas, cela peut constituer un inconvénient, du fait que le porte-conteneur 30 doit être indexé en rotation sur un pion (non représenté) placé à l'intérieur du château de transport 20, lorsqu'il est ramené dans ce dernier à la fin de la mesure. En effet, le porte-conteneur 30 peut tourner à l'intérieur du château 20, par exemple sous l'effet d'une charge non homogène placée dans le conteneur 29, au cours des manoeuvres nécessaires à la mesure, pendant lesquelles le porte-conteneur n'est plus immobilisé en rotation par le pion d'indexage.

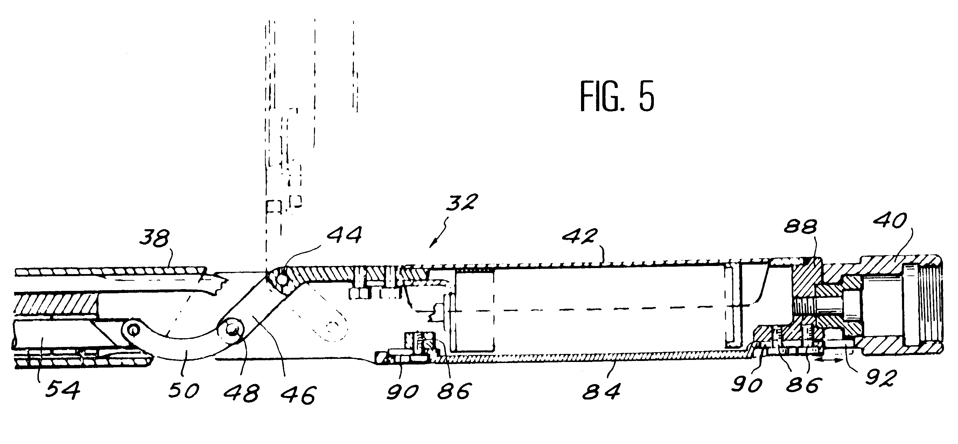

Pour remédier à cet inconvénient, on a prévu, dans la variante de réalisation qui va à présent être décrite en se référant à la figure 5, des moyens permettant de solidariser en rotation l'écrou 40 du tube 38, ces moyens étant manoeuvrables depuis l'extérieur lorsque le porte-sonde 32 est partiellement sorti du château, à la fin de la mesure.

Dans l'exemple représenté, ces moyens comprennent une tirette 84 supportée par le tube 38, en un emplacement diamétralement opposé à la porte 42, de façon à pouvoir coulisser parallèlement à l'axe du tube 38, entre une position avant de blocage de l'écrou 40 et une position arrière de déblocage de cet écrou. Le supportage et le guidage de la tirette 84 sont assurés, à chacune de ses extrémités, par des vis 86 fixées sur des pièces intérieures 88 solidaires du tube 38. Ces vis 86 traversent des fentes longitudinales 90 formées dans des parties d'extrémité de la tirette 84. Elles comportent des têtes élargies, plus larges que les fentes 90, qui ne font pas saillie au delà de l'enveloppe extérieure du tube 38 et assurent le maintien en place de la tirette 84.

Lorsque la tirette 84 est dans sa position arrière de déblocage de l'écrou 40, son extrémité avant affleure juste l'extrémité avant du tube 38.

Au contraire, lorsque la tirette 84 est dans sa position avant de blocage de l'écrou 40, son extrémité avant pénètre dans une rainure longitudinale 92 formée sur ce dernier. Toute rotation de l'écrou 40 par rapport au tube 38 est alors empêchée.

Cette variante de réalisation illustrée sur la figure 5 permet de faire tourner l'écrou 40 indépendemment du reste du porte-sonde, afin de fixer ce dernier sur la vis 28, et de faire tourner le porte-sonde 32 par rapport au porte-conteneur 30, afin d'effectuer la mesure, de la même manière que dans le mode de réalisation précédemment décrit. Pour cela, la tirette 84 est alors placée dans sa position arrière de déblocage de l'écrou.

Le blocage en rotation de l'écrou 40 par rapport au porte-sonde 32, obtenu lorsque la tirette 84 occupe sa position avant de blocage de l'écrou, permet quant à lui d'assurer l'indexage en rotation du porte-conteneur 30 à l'intérieur du château 20, lors du recul du porte-conteneur après l'exécution de la mesure.

Bien entendu, l'invention n'est pas limitée au mode de réalisation qui vient d'être décrit à titre d'exemple, mais en couvre toutes les variantes. Ainsi, le mécanisme permettant de commander le déplacement de la porte supportant la sonde entre ses positions ouverte et fermée peut être différent de celui qui a été décrit. Par ailleurs, le micro-contact déclenchant automatiquement la mise sous tension du courant d'alimentation de l'affichage de la mesure peut dans certains cas être supprimé et, lorsqu'il est présent, le déclenchement peut être obtenu dans toute position entre 0 et 90°, en fonction de la longueur de la douille 56.

## Revendications

1. Dispositif de mesure du débit de dose régnant à l'intérieur d'un château de transport (20) contenant un porte-conteneur (30) apte à recevoir un conteneur rempli de déchets radioactifs, le château de transport comportant un fond percé d'un trou de passage (26) pour un ringard de transfert apte à s'accoupler sur une vis du porte-conteneur, ce dispositif étant caractérisé par le fait qu'il comprend :
- un porte-sonde (32) comportant un tube (38) apte à traverser le trou de passage (26), un écrou d'accouplement (40) monté à une extrémité du tube et apte à être accouplé sur la vis du porte-conteneur, une porte articulée (42) formée dans le tube et apte à occuper une position fermée et une position ouverte, et des moyens de manoeuvre (54,68) accessibles depuis l'extrémité opposée du tube et commandant un déplacement de la porte entre ses positions ouverte et fermée ;
- une sonde de mesure du débit de dose (34) fixée sur la porte de façon à être escamotée dans le tube lorsque la porte est en position fermée ;
- des moyens de mesure (36) extérieurs audit tube (38) et reliés à la sonde de mesure du débit de dose par des conducteurs électriques (76) passant à l'intérieur du tube.

2. Dispositif selon la revendication 1, caractérisé par le fait que les moyens de manoeuvre (54,68) commandent également la fermeture d'un circuit électrique d'alimentation (78,80) d'un système d'affichage des moyens de mesure (36), lorsque la porte est en position ouverte.

3. Dispositif selon l'une quelconque des revendications 1 et 2, caractérisé par le fait que les moyens de manoeuvre comprennent une tige (54) coulissant axialement à l'intérieur du tube et dont une extrémité est articulée sur une biellette (50) articulée sur ladite porte (42) et située à l'opposé de cette dernière par rapport à son axe d'articulation (44) sur le tube (38).

4. Dispositif selon la revendication 3, caractérisé par le fait que les moyens de manoeuvre comprennent de plus une poignée de commande (68) coopérant par un système vis-écrou (64,66) avec l'extrémité du tube (38) opposée à l'écrou d'accouplement (40), et reliée en translation à l'extrémité de la tige (54) opposée à la biellette (50).

5. Dispositif selon la revendication 4, caractérisé par le fait que l'extrémité de la tige opposée à la biellette est solidaire d'une douille (56) qui ferme automatiquement un interrupteur (78) monté à l'extrémité du tube opposée à l'écrou d'accouplement et appartenant au circuit électrique d'alimentation du système d'affichage, lorsque la douille arrive dans une position avant correspondant à la position ouverte de la porte.

6. Dispositif selon l'une quelconque des revendications précédentes, caractérisé par le fait que la position ouverte de la porte (42) correspond à une orientation de la sonde (34) à environ 90° par rapport à l'axe du tube.

7. Dispositif selon l'une quelconque des revendications précédentes, caractérisé par le fait que l'écrou d'accouplement (40) est monté rotatif sur le porte-sonde (32), des moyens (84, 92) étant prévus pour commander un blocage en rotation de l'écrou par rapport au porte-sonde.

8. Dispositif selon la revendication 7, caractérisé par le fait que lesdits moyens pour commander un blocage en rotation de l'écrou (40) comprennent une tirette (84) montée coulissante sur le tube (38), parallèlement à l'axe de ce dernier, et une rainure (92) de l'écrou (40) apte à recevoir une extrémité de la tirette.

## Patentansprüche

1. Dosisleistungsmeßvorrichtung in einem Transportbehälter (20), der einen Containerträger (30) enthält, geeignet für die Aufnahme eines mit radioaktiven Abfällen gefüllten Containers, wobei der Transportbehälter einen Boden hat, der mit einem Durchgangsloch (26) für eine Transferstange versehenen ist, die festgekuppelt werden kann an einer Schraube des Containerträgers, wobei diese Vorrichtung dadurch gekennzeichnet ist, daß sie umfaßt:
- einen Sondenträger (32), ein Rohr (38) umfassend, geeignet das Durchgangsloch (26) zu durchqueren, eine Überwurfmutter (40), angebracht an einem Ende des Rohr und geeignet, auf die Schraube des Containerträgers geschraubt zu werden, eine angelenkte Tür (42), ausgebildet in dem Rohr und geeignet, eine geschlossene und eine offene Stellung einzunehmen, und Betätigungseinrichtungen (54,68), zugänglich von dem entgegengesetzten Ende des Rohrs, die eine Verstellung der Tür zwischen ihrer offenen und ihrer geschlossenen Stellung steuern;
- eine Meßsonde der Dosisleistung (34), so an der Tür befestigt, daß sie in das Rohr geklappt ist, wenn die Tür in geschlossener Stellung ist;
- Meßeinrichtungen (36), außerhalb des besagten Rohrs (38) und verbunden mit der Dosisleistungs-Meßsonde durch elektrische Leiter (76), die das Rohrinnere durchlaufen.

2. Vorrichtung nach Anspruch 1, dadurch gekennzeichnet, daß die Betätigungseinrichtungen (54,68) ebenfalls das Schließen einer elektrischen Versorgungsschaltung (78,80) eines Anzeigesystems der Meßeinrichtungen (36) steuern, wenn die Tür in offener Stellung ist.

3. Vorrichtung nach einem der Ansprüche 1 und 2, dadurch gekennzeichnet, daß die Betätigungseinrichtungen eine Stange (54) umfassen, die axial im Innern des Rohrs gleitet und von der ein Ende angelenkt ist an einen Schwingarm (50), angelenkt an der Tür (42) und in entgegengesetzer Richtung von dieser letzeren befindlich, bezogen auf ihre Gelenkachse (44) am Rohr (38).

4. Vorrichtung nach Anspruch 3, dadurch gekennzeichnet, daß die Betätigungseinrichtungen außerdem einen Bedienungsgriff (68) umfassen, der über ein Schraube-Mutter-System (64,66) zusammenwirkt mit dem der Überwurfmutter (40) entgegengesetzten Ende des Rohrs (38) und auf Parallelverschiebung verbunden ist mit dem dem Schwingarm (50) entgegengesetzten Ende der Stange 54.

5. Vorrichtung nach Anspruch 4, dadurch gekennzeichnet, daß das dem Schwingarm entgegengesetzte Ende der Stange fest verbunden ist mit einer Hülse (56), die automatisch einen Schalter (78) schließt, angebracht am dem der überwurfmutter entgegengesetzten Ende des Rohrs und zu der elektrischen Versorgungsschaltung des Anzeigesystems gehörend, wenn die Hülse eine vordere Stellung erreicht, die der offenen Stellung der Tür entspricht.

6. Vorrichtung nach einem der vorhergehenden Ansprüche, dadurch gekennzeichnet, daß die offene Stellung der Tür (42) einer Ausrichtung der Sonde (34) auf ungefähr 90° entspricht, bezogen auf die Achse des Rohrs.

7. Vorrichtung nach einem der vorhergehenden Ansprüche, dadurch gekennzeichnet, daß die Überwurfmutter (40) drehbar angebracht ist auf dem Sondentrager (32), wobei Einrichtungen (84, 92) vorgesehen sind, um eine Drehblockierung der Mutter bezüglich des Sondenträgers zu steuern.

8. Vorrichtung nach Anspruch 7, dadurch gekennzeichnet, daß die besagten Einrichtungen zum Steuern einer Drehblockierung der Schraube (40) ein Zug-Element (84) umfassen, das auf dem Rohr (38) gleitend angebracht ist, parallel zur Achse dieses letzteren, und eine Nut 92 der Mutter (40), geeignet ein Ende des ZugElements aufzunehmen.

## Claims

1. Apparatus for measuring the dose rate within a transportation flask (20) containing a container carrier (30) able to receive a container filled with radioactive waste, the transportation flask having a bottom which has a passage opening (26) for a transfer poker, which can be coupled to a screw of the container carrier, said apparatus being characterized in that it comprises a probe holder (32) having a tube (38) able to pass through the passage hole (26), a coupling nut (40) mounted at one end of the tube and which can be coupled to the screw of the container carrier, an articulated door (42) formed in the tube and able to occupy a closed position and an open position, and manipulating means (54, 68) accessible from the opposite end of the tube and controlling a displacement of the door between its open and closed positions; a probe (34) for measuring the dose rate fixed to the door in such a way that it can be retracted into the tube when the door is in the closed position; a measuring means (36) outside said tube (38) and connected to the probe for measuring the dose rate by electrical conductors (76) passing into the tube.

2. Apparatus according to claim 1, characterized in that the manipulating means (54, 68) also control the closing of an electric supply circuit (78, 80) for a display system of the measuring means (36), when the door is in the open position.

3. Apparatus according to either of the claims 1 and 2, characterized in that the manipulating means comprise a rod (54) sliding axially within the tube and whereof one end is articulated to a link (50) articulated to the said door (42) and positioned opposite to the latter with respect to its articulation axis (44) on the tube (38).

4. Apparatus according to claim 3, characterized in that the manipulating means also comprise a control handle (68) cooperating by a screw-nut system (64, 66) with the end of the tube (38) opposite to the coupling nut (40) and connected in translation to the end of the rod (54) opposite to the link (50).

5. Apparatus according to claim 4, characterized in that the end of the rod opposite to the link is integral with a bush (56), which automatically closes a switch (78) mounted at the end of the tube opposite to the coupling nut and belonging to the electric supply circuit of the display system, when the bush arrives in a front position corresponding to the open position of the door.

6. Apparatus according to any one of the preceding claims, characterized in that the open position of the door (42) corresponds to an orientation of the probe (34) by approximately 90° relative to the tube axis.

7. Apparatus according to any one of the preceding claims, characterized in that the coupling nut (40) is mounted in rotary manner on the probe holder (32), means (84, 92) being provided for controlling a locking in rotation of the nut with respect to the probe holder.

8. Apparatus according to claim 7, characterized in that the said means for controlling a locking in rotation of the nut (40) comprise a pull knob (84) mounted in sliding manner on the tube (38) parallel to the axis of the latter and a recess (92) of the nut (40) able to receive one end of the pull knob.
